# EUROPEAN PATENT SPECIFICATION

(11) **EP 3 507 042 B1**
(45) Date of publication and mention of the grant of the patent: **26.10.2022**
(21) Application number: 17768510.4
(22) Date of filing: 01.08.2017
(51) Int. Cl.: B23B 31/163, B23Q 1/00

(54) **LOCKING DEVICE FOR A SYMMETRIC CYLINDRICAL BODY FIXING A SEMI-FINISHED PRODUCT TO A WORKSTATION**
VERRIEGELUNGSVORRICHTUNG FÜR EINEN SYMMETRISCHEN ZYLINDRISCHEN KÖRPER ZUR BEFESTIGUNG EINES HALBZEUGS AN EINER ARBEITSSTATION
DISPOSITIF DE VERROUILLAGE POUR CORPS CYLINDRIQUE SYMÉTRIQUE FIXANT UN PRODUIT SEMI-FINI À UN POSTE DE TRAVAIL

(30) Priority: 03.08.2016 IT 201600081443 U
(43) Date of publication of application: 10.07.2019
(73) Proprietor: Rem Industrie S.R.L., 35123 Padova (IT)
(72) Inventor: PICCOLO, Sebastiano, 35012 Camposampiero (IT)
(74) Representative: Maroscia, Antonio
(86) International application number: PCT/IB2017/054692
(87) International publication number: WO 2018/025174

(56) References cited:
- EP-A1- 1 952 922
- EP-A1- 2 363 225
- US-A- 406 857

## Description

The present invention relates to a locking device for a symmetric cylindrical body fixing a semi-finished product to a workstation.

Currently, for the reversible locking of a semi-finished product ahead of machining, such as chip-forming machining, modular support systems are known which comprise a plurality of different components designed to be combined so as to provide a stable, safe and precise support in order to keep a semi-finished product in a precise preset position available to machine tools.

Modular support systems which comprise a symmetric cylindrical body provided at one end with a centering collar and in a central region with a perimetric recess that forms an engagement undercut for a corresponding locking device are currently known and increasingly widespread owing to their practicality and functionality.

This locking device generally comprises an annular locking body with movable jaws, which in turn comprises a base plate that supports a cam mechanism for the movement in a radial direction of a plurality of movable engagement jaws, said cam mechanism comprising a rotatable jaw supporting ring, which is adapted to be rotated by means of a threaded actuation element, which is screwed into a corresponding hole in said base plate, designed to act on an operation tab that extends from said rotatable jaw supporting ring.

Said threaded element comprises:
- a threaded head portion, which is arranged in a corresponding first internal complementarily threaded portion of said hole,
- a central portion having a reduced cross-section and adapted to accommodate the operation tab of the jaw supporting ring
- and a threaded tail portion, with a contoured recess for a screwing tool, which is adapted to be screwed to a corresponding second external complementarily threaded portion of said hole.

An example of these known locking device is disclosed in EP 2 363 225, on which the preamble of appended claim 1 is based.

By rotating the threaded actuation element, the rotation of the jaw supporting ring is achieved which, by virtue of the cam mechanism, causes the advancement or retraction in a radial direction of the jaws, which enter or exit from the perimetric engagement recess of the symmetric cylindrical body to which a semi-finished product is fixed.

In various locking and testing trials, known locking devices reveal limitations and criticalities which might lead to malfunctions, failures, or at least to less than optimum operation of the system.

An important problem is the operation tab that extends from the rotatable jaw supporting ring, being monolithic therewith.

Said operation tab is cylindrical and is adapted to encounter alternatively two opposite planar surfaces formed by corresponding shoulders which face the central portion having a reduced cross-section of the threaded operation element.

Continuous mutual pressure with point-like contact between the external cylindrical surface of said operation tab and the planar surfaces of the actuation element entail a problem of upsetting of said contact surfaces.

A deformation of said contact surfaces can produce an irregular rotary motion of the rotatable jaw supporting ring, with consequent risk of less-than-perfect closure of the locking device.

The aim of the present invention is to provide a locking device for a symmetric cylindrical body fixing a semi-finished product to a workstation that is capable of obviating the limitations of similar known devices.

Within this aim, an object of the invention is to provide a device that ensures a regular rotary motion of the jaw supporting ring and a consequent continuous and repeatable tightening of the locking device.

Another object of the invention is to provide a device that in any case has a performance, effectiveness and durability that are not lower than similar devices of the known type.

This aim, as well as these and other objects which will become better apparent hereinafter, are achieved by a locking device for a symmetric cylindrical body fixing a semi-finished product to a workstation according to claim 1.

Further characteristics and advantages of the invention will become better apparent from the description of a preferred but not exclusive embodiment of the locking device according to the invention, illustrated by way of non-limiting example in the accompanying drawings, wherein:
Figure 1 is a perspective cutout view of a device according to the invention;

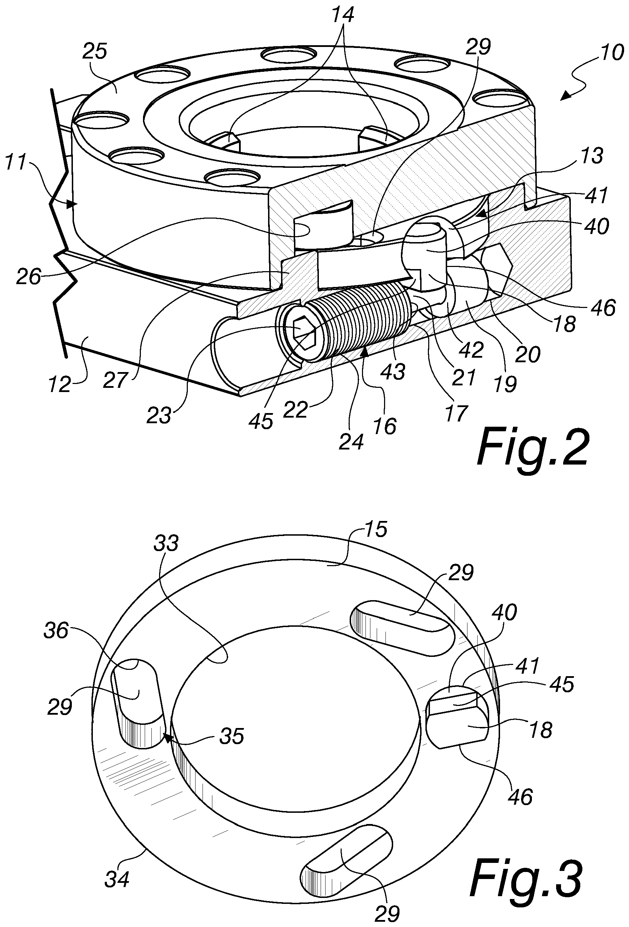

Figure 2 is a perspective view of a detail of Figure 1;
Figure 3 is a perspective view of a detail of the invention;

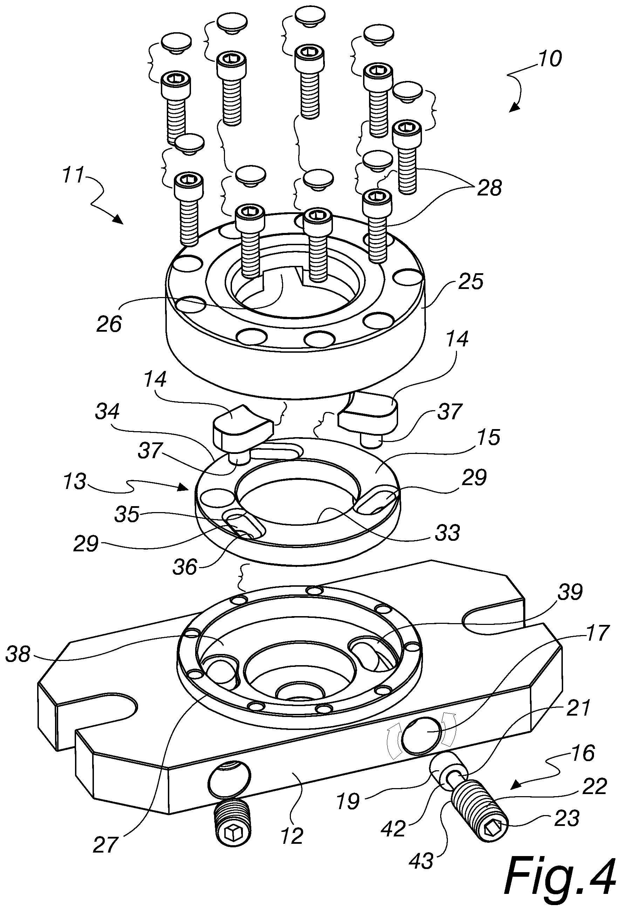

Figure 4 is an exploded perspective view of the device according to the invention.

With reference to the figures, a locking device for a symmetric cylindrical body fixing a semi-finished product to a workstation is designated generally by the reference numeral 10.

The locking device 10 comprises:
- an annular locking body with movable jaws 11, which in turn comprises a base plate 12 supporting a cam mechanism 13 for moving in a radial direction a plurality of movable engagement jaws 14,
- the cam mechanism 13 comprises a rotatable jaw supporting ring 15, which is adapted to be rotated by means of a threaded actuation element 16, which is screwed into a corresponding hole 17 in the base plate 12 and is designed to act on an operation tab 18 which extends from the rotatable jaw supporting ring 15,

- the threaded actuation element 16 comprising:
- ahead portion 19, arranged in a corresponding first internal portion 20 of the hole 17,
- a central portion 21 having a reduced cross-section which is adapted to accommodate the operation tab 18 of the jaw supporting ring 15,
- and a threaded tail portion 22, with a contoured recess for a screwing tool, which is adapted to be screwed to a corresponding complementarily threaded second external portion 24 of the hole 17.

It should be understood that the head portion 19 of the threaded actuation element 16 can be threaded and the corresponding hole portion 20 can be correspondingly threaded complementarity or can be cylindrical with a smooth surface.

The operation tab 18 is pivotable, extending from a cylindrical insert 40 which is inserted rotatably in a complementarily shaped seat 41 formed on the rotatable jaw supporting ring 15.

Said tab is adapted to encounter alternatively two opposite planar surfaces 42 and 43 which are formed by corresponding shoulders which face the central portion 21 having a reduced cross-section of the threaded actuation element 16.

In particular, in the present constructive example, the operation tab 18 is provided with two opposite planar faces 45 and 46.

By virtue of these planar faces 45 and 46 and the operation tab 18, which is pivotable by virtue of the cylindrical insert 40, the contact between the planar surfaces 42 and 43 of the actuation element 16 is no longer point- shaped and the thrust or traction force is better distributed with constancy at all the allowed rotation angles of the rotatable ring 15, with consequent elimination of the risk of upsetting the contact surfaces.

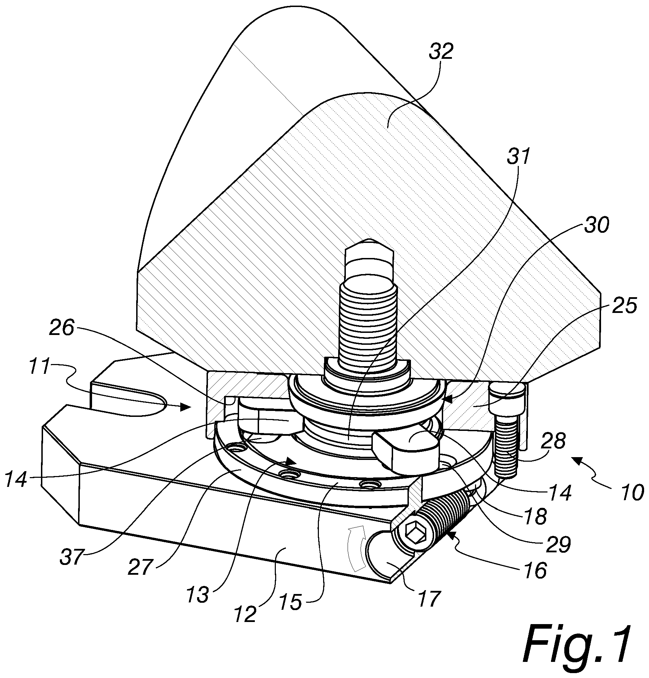

In Figure 1, the locking device 10 is shown in the active configuration with a symmetric cylindrical part supporting body 30 inside it and with the movable jaws 14 inserted in an external perimetric engagement recess 31 thereof.

The part supporting body 30 is shown fixed to a generic semi-finished product 32.

In particular, in the present exemplary embodiment of the invention, the annular locking body 11 comprises an annular cover 25 with radial seats 26 for the jaws 14; the annular cover 25 is fixed to a corresponding annular protrusion 27, which is formed on the base plate 12 by means of a series of screws 28.

The cam mechanism 13 comprises the rotatable jaw supporting ring 15, with the operation tab 18, slotted seats 29 being provided on the rotatable jaw supporting ring 15, one for each jaw 14; said slotted seats 29 extend in a tangential direction with respect to an internal perimeter 33 of the rotatable ring 15, so that a first internal end 35 of each slot 29 is proximate to the internal perimeter 33, while the opposite end 36 of the same slot 29 is proximate to the external perimeter 34 of the rotatable ring 15.

Each one of the movable jaws 14 is provided with a cylindrical operation shank 37 which is inserted in a corresponding slot 29.

The rotatable jaw supporting ring 15 is inserted in a corresponding seat 38 that is formed on the base plate 12, said seat having a lower through opening 39 for the passage and movement of the operation tab 18 in the hole 17, available to the threaded actuation element 16.

The rotation of the rotatable jaw supporting ring 15, determined by the screwing or unscrewing of the threaded actuation element 16, entails the redirection of the cylindrical shanks 37 in the slots 29 from a more inward radial position to a more outward radial position or vice versa, the movement of the cylindrical shanks 37 causing the consequent radial movement of the associated movable jaws 14 within the radial seats 26 formed in the annular cover 25.

In practice it has been found that the invention achieves the intended aim and objects.

In particular, the invention provides a device that ensures regular rotary motion of the jaw supporting ring and a consequent continuous and repeatable tightening of the locking device, by virtue of the particular pivotable operation tab which is appropriately shaped for better force distribution.

Moreover, the invention provides a device that in any case has a performance, effectiveness and durability which are not lower than similar devices of the known type.

The invention thus conceived is susceptible of numerous modifications and variations, as long as they fall under the scope of the appended claims.

## Claims

1. A locking device (10) for a symmetric cylindrical body fixing a semi-finished product to a workstation, comprising:
- an annular locking body (11) with a plurality of movable engagement jaws (14), and which in turn comprises a base plate (12) which supports a cam mechanism (13) for moving in a radial direction said plurality of movable engagement jaws (14),
- said cam mechanism (13) comprising a rotatable jaw supporting ring (15), which is adapted to be rotated by means of a threaded actuation element (16), which is screwed into a corresponding hole (17) in said base plate (12) and is designed to act on an operation tab (18) which extends from said rotatable jaw supporting ring (15),
- said threaded actuation element (16) comprising a central portion (21) having a reduced cross-section which is adapted to accommodate the operation tab (18) of the jaw supporting ring (15),
**characterized in that** said operation tab (18) is pivotable and extends from a cylindrical insert (40) that is inserted so that it can pivot within a complementarily shaped seat (41) formed in the rotatable jaw supporting ring (15), said operation tab (18) being adapted to contact alternatively two opposite planar surfaces (42, 43) formed by corresponding shoulders of the threaded actuation element (16) which face said central portion having a reduced cross-section (21).

2. The device according to claim 1, **characterized in that** said pivotable operation tab (18) is provided with two opposites planar faces (45, 46).

3. The device according to one of the preceding claims, **characterized in that** said threaded actuation element (16) comprises:
- a head portion (19), which is arranged in a corresponding first internal portion (20) of said hole (17),
- said central portion having a reduced cross-section (21) adapted to accommodate the operation tab (18) of the jaw supporting ring (15),
- and a threaded tail portion (22) with a contoured recess (23) for a screwing tool, which is adapted to be screwed to a corresponding complementarily threaded second external portion (24) of said hole (17).

4. The device according to claim 3, **characterized in that** said head portion (19) of the threaded actuation element (16) is threaded and the corresponding hole portion (20) is correspondingly complementarily threaded.

5. The device according to one of the preceding claims, **characterized in that** said annular locking body (11) comprises an annular cover (25) with radial seats (26) for the jaws (14), said annular cover (25) being fixed to a corresponding annular protrusion (27) that is formed on the base plate (12).

6. The device according to one of the preceding claims, **characterized in that** said cam mechanism (13) comprises said rotatable jaw supporting ring (15), with the operation tab (18), slotted seats (29) being provided on said rotatable jaw supporting ring (15), one for each jaw (14), said slotted seats (29) extending in a tangential direction with respect to an internal perimeter (33) of the rotatable ring (15), so that a first internal end (35) of each slot (29) is proximate to the internal perimeter (33), while the opposite end (36) of said slot (29) is proximate to the external perimeter (34) of said rotatable ring (15).

7. The device according to one of the preceding claims, **characterized in that** each one of the movable jaws (14) is provided with a cylindrical operation shank (37) inserted in a corresponding slot (29).

8. The device according to one of the preceding claims, **characterized in that** said rotatable jaw supporting ring (15) is inserted in a corresponding seat (38) formed on the base plate (12), said seat being provided with a lower through opening (39) for passage and movement of the operation tab (18) in the hole (17).

## Patentansprüche

1. Verriegelungsvorrichtung (10) für einen symmetrischen zylindrischen Körper, der ein halbfertiges Produkt an einer Arbeitsstation befestigt, umfassend:
- einen ringförmigen Verriegelungskörper (11) mit mehreren beweglichen Eingriffsbacken (14), der seinerseits eine Basisplatte (12) umfasst, die einen Nockenmechanismus (13) trägt, um die mehreren beweglichen Eingriffsbacken (14) in einer radialen Richtung zu bewegen,
- wobei der Nockenmechanismus (13) einen drehbaren Klemmbackenstützring (15) umfasst, der angepasst ist, um mittels eines Gewindebetätigungselements (16) gedreht zu werden, das in ein entsprechendes Loch (17) in der Basisplatte (12) geschraubt ist und dazu ausgelegt ist, auf eine Betätigungslasche (18) einzuwirken, die sich von dem drehbaren Klemmbackenstützring (15) erstreckt,
- wobei das mit Gewinde versehene Betätigungselement (16) einen zentralen Abschnitt (21) mit einem reduzierten Querschnitt aufweist, der angepasst ist, um die Betätigungsnase (18) des Klemmbackenstützrings (15) aufzunehmen,
**dadurch gekennzeichnet, dass** die Betätigungslasche (18) schwenkbar ist und sich von einem zylindrischen Einsatz (40) erstreckt, der so eingesetzt ist, dass er in einem komplementär geformten Sitz (41) schwenken kann, der Betätigungslasche (18) in dem drehbaren Backenstützring (15) ausgebildet ist, um alternativ zwei gegenüberliegende ebene Flächen (42, 43) zu kontaktieren, die durch entsprechende Schultern des mit Gewinde versehenen Betätigungselements (16) gebildet sind, die dem mittleren Abschnitt mit reduziertem Querschnitt (21) zugewandt sind.

2. Vorrichtung nach Anspruch 1, **dadurch gekennzeichnet, dass** die schwenkbare Betätigungslasche (18) mit zwei gegenüberliegenden ebenen Flächen (45, 46) versehen ist.

3. Vorrichtung nach einem der vorhergehenden Ansprüche, **dadurch gekennzeichnet, dass** das Gewindebetätigungselement (16) umfasst:
- einen Kopfabschnitt (19), der in einem entsprechenden ersten Innenabschnitt (20) des Lochs (17) angeordnet ist,
- wobei der Mittelabschnitt einen reduzierten Querschnitt (21) hat, der angepasst ist, um die Betätigungslasche (18) des Klemmbackenstützrings (15) aufzunehmen, und
- einen mit Gewinde versehenen Endabschnitt (22) mit einer konturierten Aussparung (23) für ein Schraubwerkzeug, das geeignet ist, an einen entsprechenden zweiten äußeren Abschnitt (24) mit komplementärem Gewinde des Lochs (17) geschraubt zu werden.

4. Vorrichtung nach Anspruch 3, **dadurch gekennzeichnet, dass** der Kopfabschnitt (19) des mit Gewinde versehenen Betätigungselements (16) mit einem Gewinde versehen ist und der entsprechende Lochabschnitt (20) entsprechend komplementär mit einem Gewinde versehen ist.

5. Vorrichtung nach einem der vorhergehenden Ansprüche, **dadurch gekennzeichnet, dass** der ringförmige Verriegelungskörper (11) eine ringförmige Abdeckung (25) mit radialen Sitzen (26) für die Backen (14) umfasst, wobei die ringförmige Abdeckung (25) an einem entsprechenden ringförmigen Vorsprung (27) befestigt ist, der an der Grundplatte (12) ausgebildet ist.

6. Vorrichtung nach einem der vorangehenden Ansprüche, **dadurch gekennzeichnet, dass** der Nockenmechanismus (13) den drehbaren Backenstützring (15) mit der Betätigungslasche (18) umfasst, wobei geschlitzte Sitze (29), einer für jede Backe (14), an dem drehbaren Backenstützring (15) vorgesehen sind, wobei sich die geschlitzten Sitze (29) in einer tangentialen Richtung bezüglich eines inneren Umfangs (33) des drehbaren Rings (15) erstrecken, so dass ein erstes inneres Ende (35) von jeder Schlitz (29) nahe dem Innenumfang (33) liegt, während das gegenüberliegende Ende (36) des Schlitzes (29) nahe dem Außenumfang (34) des drehbaren Rings (15) liegt.

7. Vorrichtung nach einem der vorhergehenden Ansprüche, **dadurch gekennzeichnet, dass** jede der beweglichen Backen (14) mit einem zylindrischen Betätigungsschaft (37) versehen ist, der in einen entsprechenden Schlitz (29) eingesetzt ist.

8. Vorrichtung nach einem der vorangehenden Ansprüche, **dadurch gekennzeichnet, dass** der drehbare Backenstützring (15) in eine entsprechende Aufnahme (38) eingesetzt ist, die an der Grundplatte (12) ausgebildet ist, wobei die Aufnahme mit einer unteren Durchgangsöffnung (39) für den Durchgang und die Bewegung der Betätigungslasche (18) in dem Loch (17) versehen ist.

## Revendications

1. Dispositif de verrouillage (10) pour un corps cylindrique symétrique fixant un produit semi-fini à un poste de travail, comprenant:
- un corps de verrouillage annulaire (11) avec une pluralité de mâchoires d'engagement mobiles (14), et qui à son tour comprend une plaque de base (12) qui supporte un mécanisme à came (13) pour déplacer dans une direction radiale ladite pluralité de mâchoires d'engagement mobiles (14),
- ledit mécanisme à came (13) comprenant une bague de support de mâchoire rotative (15), qui est adaptée pour être tournée au moyen d'un élément d'actionnement fileté (16), qui est vissé dans un trou correspondant (17) dans ladite plaque de base (12) et est conçu pour agir sur une patte de manoeuvre (18) qui s'étend depuis ladite bague de support de mâchoire rotative (15),
- ledit élément d'actionnement fileté (16) comprenant une partie centrale (21) ayant une section réduite qui est adaptée pour recevoir la patte de manoeuvre (18) de la bague de support de mâchoire rotative (15),
**caractérisé en ce que** ladite patte d'actionnement (18) peut pivoter et s'étend à partir d'un insert cylindrique (40) qui est inséré de manière à pouvoir pivoter à l'intérieur d'un siège de forme complémentaire (41) formé dans la bague de support de mâchoire rotative (15), ladite patte d'actionnement (18) étant adaptée pour contacter alternativement deux surfaces planes opposées (42, 43) formées par des épaulements correspondants de l'élément d'actionnement fileté (16) qui font face à ladite partie centrale ayant une section transversale réduite (21).

2. Dispositif selon la revendication 1, **caractérisé en ce que** ladite patte d'actionnement pivotante (18) est pourvue de deux faces planes opposées (45, 46).

3. Dispositif selon l'une des revendications précédentes, **caractérisé en ce que** ledit élément d'actionnement fileté (16) comprend:
- une partie de tête (19), qui est agencée dans une première partie interne correspondante (20) dudit trou (17),
- ladite partie centrale ayant une section réduite (21) adaptée pour recevoir la patte de manoeuvre (18) de l'anneau de support de mâchoire rotative (15),
- et une partie de queue filetée (22) avec un évidement profilé (23) pour un outil de vissage, qui est adapté pour être vissé à une deuxième partie externe correspondante complémentairement filetée (24) dudit trou (17).

4. Dispositif selon la revendication 3, **caractérisé en ce que** ladite partie de tête (19) de l'élément d'actionnement fileté (16) est filetée et la partie de trou correspondante (20) est filetée de façon complémentaire de manière correspondante.

5. Dispositif selon l'une des revendications précédentes, **caractérisé en ce que** ledit corps annulaire de verrouillage (11) comprend un couvercle annulaire (25) avec des sièges radiaux (26) pour les mâchoires (14), ledit couvercle annulaire (25) étant fixé à un une saillie annulaire correspondante (27) qui est formée sur la plaque de base (12).

6. Dispositif selon l'une des revendications précédentes, **caractérisé en ce que** ledit mécanisme à came (13) comprend ladite bague de support de mâchoire rotative (15) avec la patte d'actionnement (18), des sièges à fentes (29) étant prévus, un pour chaque mâchoire (14), sur ladite bague de support de mâchoire rotative (15), lesdits sièges fendus (29) s'étendant dans une direction tangentielle par rapport à un périmètre interne (33) de la bague rotative (15), de sorte qu'une première extrémité interne (35) de chaque fente (29) est proche du périmètre interne (33) de ladite bague rotative, tandis que l'extrémité opposée (36) de ladite fente (29) est proche du périmètre externe (34) de ladite bague rotative (15).

7. Dispositif selon l'une des revendications précédentes, **caractérisé en ce que** chacune des mâchoires mobiles (14) est munie d'une tige cylindrique de manoeuvre (37) insérée dans une fente correspondante (29).

8. Dispositif selon l'une des revendications précédentes, **caractérisé en ce que** ladite bague de support de mâchoire rotative (15) est insérée dans un siège correspondant (38) formé sur la plaque de base (12), ledit siège étant pourvu d'une ouverture traversante inférieure (39) pour le passage et le déplacement de la patte de manoeuvre (18) dans le trou (17).
